# NEUE EUROPÄISCHE PATENTSCHRIFT

(11) **EP 2 913 554 B2**
(45) Veröffentlichungstag und Bekanntmachung des Hinweises auf die Entscheidung über den Einspruch: **22.07.2020**
(45) Hinweis auf die Patenterteilung: 23.11.2016
(21) Anmeldenummer: 15155583.6
(22) Anmeldetag: 18.02.2015
(51) Int. Cl.: F16D 25/0638, F16D 25/12, F16D 1/08

(54) **Federpaket, Kupplung und Kupplungsherstellungsverfahren**
Spring package, coupling and coupling production method
Ensemble de ressorts, couplage et procédé de fabrication de couplage

(30) Priorität: 26.02.2014 DE 102014102515
(43) Veröffentlichungstag der Anmeldung: 02.09.2015
(73) Patentinhaber: GETRAG B.V. & Co. KG, 74199 Untergruppenbach (DE); Valeo Embrayages, 80009 Amiens Cedex 2 (FR)
(72) Erfinder: Kramm, Torsten, 74360 Ilsfeld (DE); Bellinger, Gerhard, 69242 Muehlhausen (DE); Gremplini, Hansi, 74379 Ingersheim (DE); Depoilly, Nicolas, 80480 Dury (FR); Dekydtspotter, Pascal, 80560 Puchevillers (FR); Olivier, Doremus, 62690 Izel les Hameaux (FR)
(74) Vertreter: Witte, Weller & Partner Patentanwälte mbB

(56) Entgegenhaltungen:
- EP-A1- 1 298 355
- EP-A1- 1 726 842
- EP-A1- 1 729 025
- DE-A1- 3 305 419
- DE-A1- 19 836 596
- GB-A- 2 018 174
- US-A1- 2005 207 835
- US-A1- 2009 014 274

## Beschreibung

Die vorliegende Erfindung betrifft eine Kupplungsanordnung für einen Kraftfahrzeugantriebsstrang, mit einem Trägerelement, das eine sich axial erstreckende Ringfläche aufweist, an der ein Federpaket gelagert ist. Das Federpaket ist versehen mit einem ersten Ringelement, mit einem zweiten Ringelement und mit einer Mehrzahl von Einzelfedern, die mit dem ersten und dem zweiten Ringelement gekoppelt sind, derart, dass das erste und das zweite Ringelement in einer axialen Richtung gegeneinander federgekoppelt bewegbar sind, wobei das erste und das zweite Ringelement jeweils einen Innenumfangsabschnitt und einen Außenumfangsabschnitt aufweisen.

Schließlich betrifft die vorliegende Erfindung ein Verfahren zum Herstellen einer Kupplungsanordnung unter Verwendung eines derartigen Federpaketes.

Auf dem Gebiet der Kupplungsanordnungen für Kraftfahrzeugantriebsstränge ist es bekannt, vorgefertigte Federpakete dazu zu verwenden, um eine Kupplung der Kupplungsanordnung in eine vorbestimmte Position vorzuspannen, beispielsweise in eine geöffnete Position ("normally open").

Insbesondere bei Kupplungsanordnungen, die hydraulisch betätigt werden, ist es dabei bekannt, ein solches Federpaket bei der Montage der Kupplungsanordnung auf ein Trägerelement aufzuschieben. Das Trägerelement kann beispielsweise ein hydraulisch betätigter Kolben der Kupplungsanordnung sein.

Sofern das Federpaket an dem Trägerelement über eine Spielfassung montiert wird, besteht die Gefahr, dass das Federpaket während der Montage sich von dem Trägerelement löst, bevor weitere Elemente montiert werden können. Sofern das Federpaket mit einer Presspassung an dem Trägerelement montiert wird, kann dies zu Deformationen eines Ringelementes und/oder des Trägerelementes führen. Dies kann die Funktion des Federpaketes im späteren Betrieb nachteilig beeinflussen.

Die bislang durchgeführten Fertigungsprozesse sind folglich nicht "robust".

Vor diesem Hintergrund ist es eine Aufgabe der Erfindung, eine verbesserte Kupplungsanordnung und ein verbessertes Herstellungsverfahren für eine Kupplungsanordnung anzugeben.

Die obige Aufgabe wird gelöst durch eine Kupplungsanordnung für einen Kraftfahrzeugantriebsstrang gemäß Anspruch 1, mit einem Trägerelement, das eine sich axial erstreckende Ringfläche aufweist, an der ein Federpaket gelagert ist, wobei das Federpaket ein erfindungsgemäßes Federpaket ist und wobei die verformbaren Elemente eines Ringelementes sich an der Ringfläche verformt haben und das Federpaket in Bezug auf das Trägerelement zentrieren und/oder verliersicher halten.

Schließlich wird die Aufgabe gelöst durch ein Verfahren zum Herstellen einer Kupplungsanordnung gemäß Anspruch 3, insbesondere einer erfindungsgemäßen Kupplungsanordnung, mit den Schritten, ein erfindungsgemäßes Federpaket bereitzustellen und das Federpaket auf ein Trägerelement der Kupplungsanordnung axial aufzuschieben, wobei sich die verformbaren Elemente eines Ringelementes an dem Trägerelement radial verformen, um das Federpaket in Bezug auf das Trägerelement zu zentrieren und/oder verliersicher zu halten.

Mit dem Federpaket ist es aufgrund der verformbaren Vorsprünge möglich, die Herstellung der Kupplungsanordnung zu vereinfachen. Da sich nicht ein gesamtes Ringelement bei Erzielung eines Presssitzes verformen muss, sondern lediglich die Vorsprünge, kann die Montage mit einer vergleichsweise geringen axialen Montagekraft erfolgen. Ferner ist es vorteilhaft, wenn über die Vorsprünge eine spielfreie Zentrierung an dem Trägerelement realisierbar ist. Ferner ist es alternativ oder zusätzlich möglich, das Ringelement bzw. das gesamte Federpaket über die Vorsprünge an dem Trägerelement im Presssitz zu halten.

Folglich können Verformungen des Ringelementes insgesamt bei der Montage verringert oder verhindert werden. Ferner kann vorzugsweise verhindert werden, dass sich das Federpaket während der Montage wieder von dem Trägerelement löst, bevor weitere Montageschritte durchgeführt werden.

Insgesamt ergibt sich folglich ein robustes und kostengünstiges Herstellungsverfahren.

Die Vorsprünge sind vorzugsweise so ausgebildet, dass diese ein sehr geringes Übermaß in Bezug auf die Ringfläche des Trägerelementes haben. Das Übermaß kann beispielsweise in einem Bereich von 0,01 - 3 mm liegen, insbesondere in einem Bereich von 0,02 - 2 mm, insbesondere in einem Bereich von 0,04 -1 mm.

Hieraus ergibt sich, dass das axiale Aufschieben des Federpaketes auf das Trägerelement mit einer minimalen Kraft einhergeht, die vorzugsweise größer ist als 10N und/oder vorzugsweise kleiner ist als 3kN.

Innerhalb dieses Bereiches ist es vorteilhaft, dass nachteilige Verformungen insbesondere des Ringelementes im Bereich zwischen Innenumfangsabschnitt und Außenumfangsabschnitt vermieden werden.

Innerhalb dieses Bereiches weisen die Ringelemente vorzugsweise Prägungen auf, über die die Einzelfeder mit den Ringelementen koppelbar sind.

Verformungen in diesem Bereich könnten folglich die Kopplung zwischen den Einzelfedern und den Ringelementen gefährden.

Die Einzelfedern sind vorzugsweise jeweils Schrauben- oder Spiralfedern und können insbesondere als Druckfedern ausgebildet sein, können jedoch auch als Zugfedern ausgebildet sein.

Die Anzahl der verformbaren Elemente, die vorzugsweise über den Innenumfangsabschnitt bzw. den Außenumfangsabschnitt gleichförmig verteilt angeordnet sind, liegt vorzugsweise im Bereich von 3 - 8, insbesondere im Bereich von 3 - 6 und beträgt insbesondere 4.

Generell ist es bevorzugt, wenn wenigstens eines der Ringelemente als Blechteil ausgebildet ist, das beispielsweise durch Stanzen oder dergleichen hergestellt sein kann. Die Blechteile weisen dabei eine relativ geringe axiale Dicke auf und definieren eine radiale Blechebene.

In die Blech-Ringelemente können dabei axiale Löcher ausgebildet werden, die so aufgeprägt werden, dass axial vorstehende Prägeabschnitte bzw. Ringprägungen gebildet werden, auf die die Einzelfedern axial aufgeschoben und verliersicher daran festgelegt werden können.

Die Verformbarkeit der Elemente in radialer Richtung kann durch eine elastische und/oder plastische Verformbarkeit eingerichtet werden. Bevorzugt ist eine radial elastische Verformbarkeit. Die Vorsprünge erstrecken sich vorzugsweise jeweils über einen Winkelbereich des Innenumfangsabschnittes und/oder des Außenumfangsabschnittes von kleiner 25°, insbesondere kleiner 15°, und besonders bevorzugt kleiner 10°. Der Winkelbereich ist wenigstens 1° groß.

Gemäß einer besonders bevorzugten Ausführungsform ist das erste und/oder das zweite Ringelement als Blechteil mit einem kreisförmigen Innenumfangsabschnitt und/oder Außenumfangsabschnitt ausgebildet, wobei die verformbaren Elemente als Vorsprünge ausgebildet sind, die gegenüber dem kreisförmigen Innenumfangsabschnitt und/oder Außenumfangsabschnitt vorstehen.

Bei dieser Ausführungsform kann erreicht werden, dass nur die verformbaren Elemente bei einem axialen Aufschieben des Federpaketes auf das Trägerelement verformt werden, nicht jedoch die Ringteile selber.

Gemäß einer weiteren bevorzugten Ausführungsform sind die Vorsprünge unter einem Winkel gegenüber einer radialen Ebene des Blechteils ausgerichtet, wobei der Winkel größer ist als 0° und kleiner ist als 90°.

Besonders bevorzugt ist der Winkel größer 10° und kleiner 45°.

Die Winkelangabe gilt für den unverformten Zustand. Im verformten Zustand kann der Winkel kleiner oder größer sein als in unverformtem Zustand.

Die Ausrichtung des Winkels in Bezug auf die Blechebene ist vorzugsweise so gewählt, dass die Vorsprünge hin zu einer axialen Mitte des Federpaketes gerichtet sind. Demzufolge lassen sich die Federpakete auf vergleichsweise einfache Weise auf ein Trägerelement aufschieben, da die Vorsprünge selber eine Art Zentrierungsfunktion bei der ersten Berührung des Trägerelementes besitzen.

Die verformbaren Elemente können als separate Elemente hergestellt und mit dem Ringelement gekoppelt sein.

Besonders bevorzugt ist es jedoch, wenn die verformbaren Elemente einstückig mit dem Ringelement ausgebildet sind.

Insbesondere bei einem Herstellungsverfahren wie Stanzen der Ringelemente als Blechteile sind die verformbaren Elemente auf diese Weise einfach zu fertigen.

Generell können die zwei Ringelemente des Federpaketes durch unterschiedliche Bauteile gebildet sein.

Besonders bevorzugt ist es jedoch, wenn die Ringelemente als Gleichteile hergestellt sind.

Hierdurch kann der Herstellungsaufwand für das Federpaket vereinfacht werden.

Sofern die Vorsprünge unter einem Winkel gegenüber einer radialen Ebene eines Blechteils ausgerichtet sind, ist es bevorzugt, wenn die Vorsprünge der zwei Ringelemente aufeinander zuweisen, so dass die Ringelemente im Wesentlichen spiegelsymmetrisch in Bezug auf eine zwischen den Ringelementen liegende Radialebene ausgerichtet sind.

Die Vorsprünge der zwei Ringelemente können für diesen Fall in Umfangsrichtung miteinander ausgerichtet sein, können jedoch auch in Umfangsrichtung versetzt gegenüber einander angeordnet sein.

Bei der erfindungsgemäßen Kupplungsanordnung ist es bevorzugt, wenn das andere Ringelement, also jenes, das nicht in Bezug auf eine Ringfläche des Trägerelementes verformte Vorsprünge aufweist, in der Kupplungsanordnung radial beweglich gelagert ist.

Das andere Ringelement kann sich in axialer Richtung der Kupplungsanordnung beispielsweise direkt oder indirekt an einem gehäusefesten oder an einem mit dem Trägerelement drehfest verbundenen Gegenelement abstützen. Das Gegenelement kann beispielsweise durch einen Radialsteg gebildet sein.

Bei einer Doppelkupplungsanordnung ist es bevorzugt, wenn zwei Federpakete, die vorzugsweise identisch ausgebildet sind, auf axial gegenüberliegenden Seiten eines derartigen Radialsteges angeordnet sind, wobei sich jeweils ein anderes Ringelement von beiden Federpaketen direkt oder indirekt in axialer Richtung an dem Radialsteg abstützt und wobei das jeweilige eine Ringelement vorzugsweise an einer Ringfläche eines Trägerelementes auf erfindungsgemäße Art und Weise montiert ist, wobei das Trägerelement vorzugsweise ein Kolben einer Aktuatoranordnung für eine jeweilige Reibkupplung der Doppelkupplungsanordnung ist.

Die Doppelkupplungsanordnung weist vorzugsweise zwei nasslaufende Lamellenkupplungen auf.

Der Radialsteg ist vorzugsweise an einer Hülse festgelegt, die über eine Drehdurchführung an einer gehäusefesten Nabe gelagert ist. Der Radialsteg dient vorzugsweise auch zum Lagern bzw. Abstützen eines Eingangsgliedes der Doppelkupplungsanordnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Doppelkupplungsanordnung für ein Doppelkupplungsgetriebe mit zwei nasslaufenden Reibkupplungen und zwei hydraulischen Aktuatoranordnungen sowie zwei axial wirkenden Federpaketen.
- Fig. 2: auf der rechten Seite eine schematische Darstellung einer Ausführungsform eines Federpaketes und auf der linken Seite das auf eine Ringfläche eines Trägerelementes axial aufgeschobene Federpaket in schematischer Darstellung;
- Fig. 3: eine schematische Draufsicht auf eine weitere Ausführungsform einer erfindungsgemäßen Kupplungsanordnung mit einem Federpaket; und
- Fig. 4: eine schematische perspektivische Ansicht einer weiteren Ausführungsform eines Federpaketes.

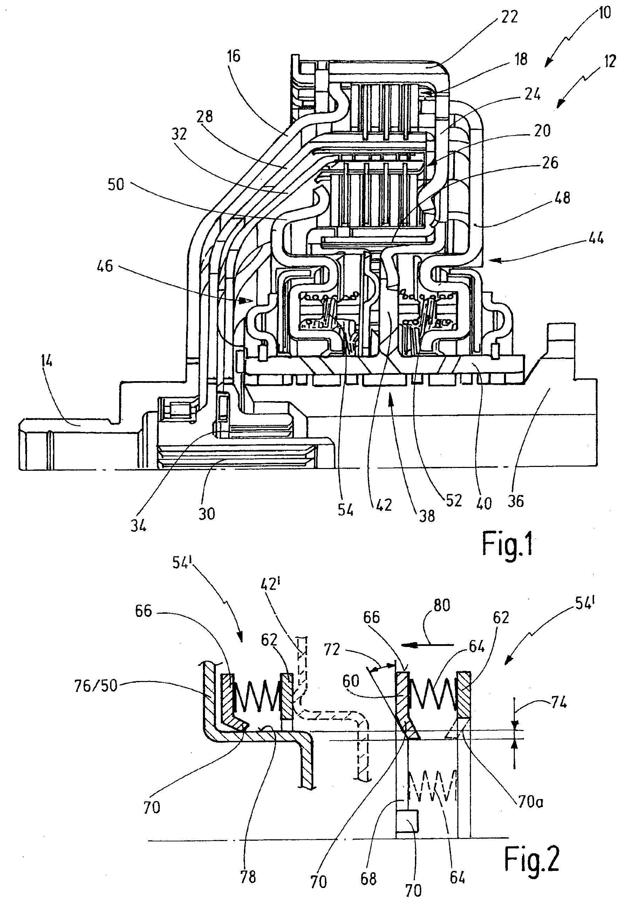

In Fig. 1 ist ein Antriebsstrang für ein Kraftfahrzeug schematisch dargestellt und generell mit 10 bezeichnet.

Der Antriebsstrang 10 beinhaltet eine Doppelkupplungsanordnung 12, deren Eingangswelle 14 mit einem Antriebsmotor wie einem Verbrennungsmotor koppelbar ist. Die Eingangswelle 14 ist mit einem Eingangsglied 16 in Form eines Antriebskorbes verbunden.

Die Doppelkupplungsanordnung 12 weist eine erste Reibkupplung 18 und eine zweite Reibkupplung 20 auf, die radial ineinander verschachtelt angeordnet sind. Die Reibkupplungen 18, 20 sind als nasslaufende Lamellenkupplungen ausgebildet.

Ein Außenlamellenträger 22 der ersten Reibkupplung 18 ist mit dem Eingangsglied 16 verbunden. Der Außenlamellenträger 22 ist auf der der Eingangswelle 14 abgewandten Seite mit einem Radialglied 24 verbunden, das wiederum mit einem Innenlamellenträger 26 der zweiten Reibkupplung 20 verbunden ist. Ein nicht näher bezeichneter Innenlamellenträger der ersten Reibkupplung 18 ist mit einem ersten Ausgangsglied 28 verbunden, das axial benachbart zu dem Eingangsglied 16 angeordnet und als erster Abtriebskorb ausgebildet ist. Das erste Ausgangsglied 28 ist mit einer ersten Ausgangswelle 30 in Form einer Innenwelle verbunden, die mit einem ersten Teilgetriebe des Antriebsstranges 10 verbindbar ist.

In entsprechender Weise ist ein nicht näher bezeichneter Außenlamellenträger der zweiten Reibkupplung 20 mit einem zweiten Ausgangsglied 32 verbunden, das ebenfalls als Abtriebskorb ausgebildet ist und axial benachbart zu dem ersten Ausgangsglied 28 angeordnet ist. Das zweite Ausgangsglied 32 ist mit einer zweiten Ausgangswelle 34 verbunden, die als Hohlwelle ausgebildet ist und die mit einem zweiten Teilgetriebe des Antriebsstranges 10 verbindbar ist.

Die Doppelkupplungsanordnung 12 beinhaltet ferner eine gehäusefeste Nabe 36, die sich von der der Eingangswelle 14 gegenüberliegenden axialen Seite in axialer Richtung in die Reibkupplungen 18, 20 hinein erstreckt. An der gehäusefesten Nabe 36 ist eine Hülse 40 drehbar gelagert. Zwischen der Hülse 40 und der gehäusefesten Nabe 36 ist eine Drehdurchführung 38 ausgebildet, über die Hydraulikfluid zur Kühlung und Betätigung der Reibkupplungen 18, 20 zugeführt werden kann.

An einem Außenumfang der Hülse 40 ist ein Radialsteg 42 festgelegt, der in axialer Richtung etwa mittig in Bezug auf die Reibkupplungen 18, 20 angeordnet ist.

Die Doppelkupplungsanordnung 12 weist ferner eine erste Aktuatoranordnung 44 zur Betätigung der ersten Reibkupplung 18 und eine zweite Aktuatoranordnung 46 zur Betätigung der zweiten Reibkupplung 20 auf. Die erste Aktuatoranordnung 44 beinhaltet einen ersten Kolben 48. Die zweite Aktuatoranordnung 46 beinhaltet einen zweiten Kolben 50. Die Kolben 48, 50 sind axial gegenüberliegenden Seiten des Radialsteges 42 angeordnet und dazu ausgelegt, die erste bzw. die zweite Reibkupplung 18, 20 zu betätigen, wobei die Kolben 48, 50 ausgehend aus den in Fig. 1 gezeigten Ausgangspositionen jeweils in Richtung aufeinander zubewegt werden, um die zugeordnete Reibkupplung 18, 20 zu betätigen.

Die erste Aktuatoranordnung 44 weist ein erstes Federpaket 52 auf. Die zweite Aktuatoranordnung 46 weist ein zweites Federpaket 54 auf.

Die Federpakete 52, 54 sind auf axial gegenüberliegenden Seiten des Radialsteges 42 angeordnet. Die Federpakete 52, 54 stützen sich jeweils direkt oder indirekt in axiale Richtung an dem Radialsteg 42 ab. An ihren axial entgegengesetzten Enden sind die Federpakete 52, 54 jeweils an nicht näher bezeichneten Ringflächen der Kolben 48 bzw. 50 gelagert.

Die Federpakete 52, 54 weisen jeweils ein erstes Ringelement 60 und ein zweites Ringelement 62 auf (siehe bspw. Fig. 2). Ferner beinhalten die Federpakete 52, 54 jeweils eine Mehrzahl von Einzelfedern 64, die vorzugsweise als Druckfedern ausgebildet sind. Die Federpakete 52, 54 spannen die Kolben 48, 50 folglich in eine Position vor, bei der die jeweiligen Reibkupplungen 18, 20 geöffnet sind ("normally open").

Die einzelnen Federn der Federpakete 52, 54 sind jeweils vorzugsweise Spiraldruckfedern.

Das erste und/oder das zweite Ringelement 60, 62 weist im Bereich seines Innenumfangsabschnittes 68 und/oder im Bereich seines Außenumfangsabschnittes 66 eine Mehrzahl von radial verformbaren Elementen 70 auf, die sich in dem gezeigten montierten Zustand in Bezug auf eine sich axial erstreckende Ringfläche des jeweiligen Kolbens verformt haben (in Fig. 1 nicht im Detail gezeigt). Auf diese Art und Weise werden die Federpakete 52, 54 in Bezug auf ihre jeweiligen Kolben 48, 50 zentriert und/oder verliersicher gehalten.

In den nachfolgenden Fig. 2 bis 4 sind bevorzugte Ausgestaltungen derartiger Federpakete dargestellt, wobei diese jeweils anhand des Federpaketes 54 exemplarisch gezeigt sind. Die Federpakete 52, 54 sind jedoch vorzugsweise identisch aufgebaut, so dass die Darstellungen des zweiten Federpaketes 54 sich in entsprechender Weise auf das erste Federpaket 52 beziehen lassen.

In Fig. 2 ist eine bevorzugte Ausführungsform eines derartigen Federpaketes 54' in schematischer Längsschnittansicht dargestellt. Das Federpaket 54' weist ein erstes Ringelement 60 und ein zweites Ringelement 62 auf. Zwischen den Ringelementen 60, 62 ist eine Mehrzahl von Einzelfedern 64 in Form von Schraubendruckfedern angeordnet. Die Einzelfedern 64 sind an ihren axialen Enden jeweils mit den Ringelementen 60, 62 verliersicher gekoppelt. Die Ringelemente 60, 62 sind vorzugsweise als Blechteile ausgebildet und insbesondere durch Stanzen oder dergleichen hergestellt.

Die Ringelemente 60, 62 weisen jeweils einen Außenumfangsabschnitt 66 und einen Innenumfangsabschnitt 68 auf. Diese Umfangsabschnitte sind jeweils kreisförmig ausgebildet.

Vorliegend weist das erste Ringelement 60 eine Mehrzahl von über den Umfang verteilt angeordneten Vorsprüngen 70 auf, die sich von dem Innenumfangsabschnitt 68 aus in radialer Richtung nach innen erstrecken.

Die Vorsprünge 70 sind unter einem Winkel 72 in Bezug auf eine Radialebene des ersten Ringelementes 60 ausgerichtet. Der Winkel 72 ist größer 0° und kleiner 90° und kann insbesondere im Bereich zwischen 5° und 45° liegen.

Die Vorsprünge 70 erstrecken sich in radialer Richtung dergestalt, dass sie einen Innendurchmesser definieren, der kleiner ist als der Außendurchmesser einer Ringfläche 78 eines Trägerelementes 76. Das Trägerelement 76 kann beispielsweise der in Fig. 1 dargestellte Kolben 50 sein.

Die Ringfläche 78 ist im Wesentlichen als sich axial erstreckende Ringfläche oder Zylinderfläche ausgebildet, derart, dass sich das Federpaket 54' in axialer Richtung auf die Ringfläche 78 aufschieben lässt, wie es in Fig. 2 durch einen Pfeil dargestellt ist.

Auf der linken Seite in Fig. 2 ist das Federpaket 54' im montierten Zustand gezeigt. Hierbei sind die Vorsprünge 70 in radialer Richtung nach außen verformt, derart, dass die Vorsprünge 70 im Presssitz in Bezug auf das Trägerelement 76 festgelegt sind. Der Presssitz ist so gewählt, dass das Federpaket 54' in Bezug auf das Trägerelement 76 zentriert ist und/oder verliersicher gehalten ist.

Demzufolge kann nach der Montage des Federpaketes 54' an dem Trägerelement 76 ein weiteres Element montiert werden und/oder die Anordnung aus Trägerelement 76 und Federpaket 54' kann in Bezug auf ein weiteres Element montiert werden, beispielsweise den Radialsteg 42 der Fig. 1 oder ein entsprechendes, in Fig. 2 schematisch angedeutetes Element 42'.

Das zweite Ringelement 62 wird in diesem montierten Zustand in radialer Richtung beweglich gelagert, stützt sich jedoch in axialer Richtung an dem weiteren Element 42' ab, wie es in Fig. 2 auf der linken Seite dargestellt ist.

In Fig. 2 ist bei 70a schematisch dargestellt, dass das zweite Ringelement 62 an seinem Innenumfangsabschnitt mit entsprechenden Vorsprüngen 70a ausgestattet sein kann.

Diese Vorsprünge 70a sind in der dargestellten Montagevariante jedoch funktionslos. Vorteilhaft ist jedoch, dass die Ringelemente 60, 62 als Gleichteile hergestellt werden können, wobei diese spiegelsymmetrisch zueinander so angeordnet werden, dass deren Vorsprünge 70, 70a aufeinander zuweisen.

Durch die Ausrichtung der Vorsprünge 70 und/oder der Vorsprünge 70a so, dass sie sich von einer axialen Außenfläche des jeweiligen Ringelementes 60, 62 hin zu dem jeweiligen anderen Ringelement erstrecken, wird die Montage und Zentrierung an dem Trägerelement 76 vereinfacht.

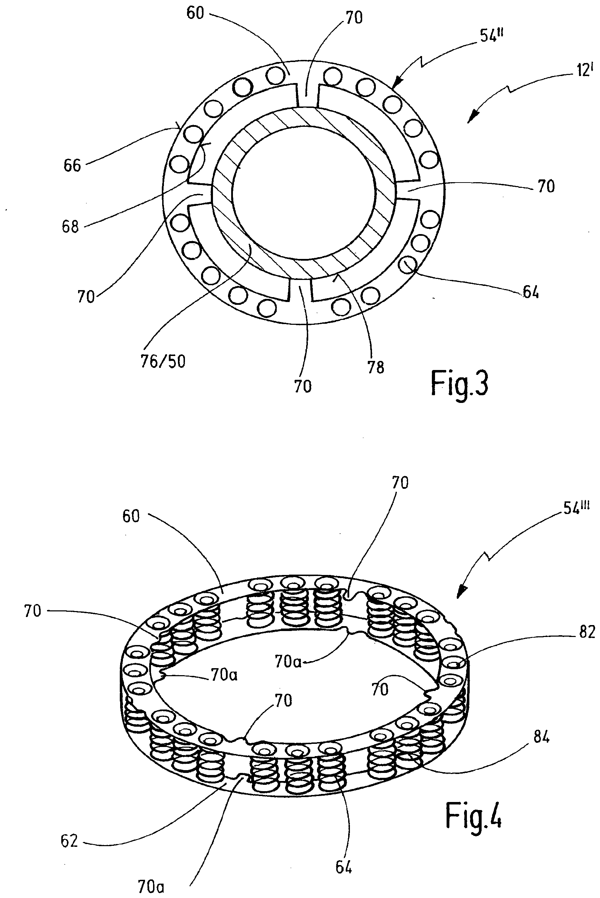

Fig. 3 zeigt eine weitere Ausführungsform eines Antriebsstranges 12' mit einer weiteren Ausführungsform eines Federpaketes 54". Hier ist gezeigt, dass das Trägerelement 76 (bzw. 50) eine sich in axialer Richtung erstreckende Ringfläche 78 aufweist. Ferner ist zu erkennen, dass das Ringelement 60 vorliegend bspw. vier Vorsprünge 70 aufweist, die über den Umfang gleichmäßig verteilt angeordnet sind, vorliegend mit einem Winkelabstand von 90°.

Die in Fig. 3 dargestellten Vorsprünge 70 sind jeweils bereits in radialer Richtung verformt, wie es in Fig. 2 auf der linken Seite dargestellt ist.

In Fig. 4 ist eine weitere Ausführungsform eines Federpaketes 54"' dargestellt. Dieses weist Ringelemente 60, 62 in Form von Blechteilen auf, die jeweils Vorsprünge 70 bzw. 70a aufweisen, und zwar ebenfalls vier Vorsprünge 70, 70a, wie bei der Ausführungsform der Fig. 3.

Ferner ist zu erkennen, dass die Ringelemente 60, 62 jeweils am Umfang verteilt eine Mehrzahl von Löchern 82 aufweisen, an denen axial vorstehende Ringprägungen 84 ausgebildet. An den Ringprägungen 84 können die Einzelfedern 64 festgelegt werden, wie es im Stand der Technik an sich bekannt ist.

Die oben beschriebenen Federpakete 54 lassen sich jeweils als ein Element handhaben und werden vorzugsweise lediglich mittels eines Ringelementes 60 in Bezug auf ein zugeordnetes Trägerelement wie einen Kolben innerhalb der jeweiligen Kupplungsanordnung montiert.

## Patentansprüche

1. Kupplungsanordnung (12) für einen Kraftfahrzeugantriebsstrang (10), mit einem Trägerelement (76), das eine sich axial erstreckende Ringfläche (78) aufweist, an der ein Federpaket (52; 54) gelagert ist,
wobei das Federpaket (52, 54) ein erstes Ringelement (60), ein zweites Ringelement (62) und eine Mehrzahl von Einzelfedern (64) aufweist, die mit dem ersten und dem zweiten Ringelement (60, 62) gekoppelt sind, derart, dass das erste und das zweite Ringelement (60, 62) in einer axialen Richtung gegeneinander federgekoppelt bewegbar sind, wobei das erste und das zweite Ringelement (60, 62) jeweils einen Innenumfangsabschnitt (68) und einen Außenumfangsabschnitt (66) aufweisen,
wobei das erste und/oder das zweite Ringelement (60, 62) im Bereich ihrer jeweiligen Innenumfangsabschnitte (68) und/oder im Bereich ihrer jeweiligen Außenumfangsabschnitte eine Mehrzahl von radial verformbaren Elementen (70; 70a) aufweist, die dazu ausgebildet sind, um das Federpaket (52; 54) in Bezug auf die Ringfläche (78) zentrieren zu können,
wobei die verformbaren Elemente (70; 70a) eines Ringelements (60, 62) sich an der Ringfläche (78) verformt haben und das Federpaket (52; 54) in Bezug auf das Trägerelement (78) verliersicher halten, so dass das Federpaket (52; 54) verliersicher an der Ringfläche (78) montiert ist.

2. Kupplungsanordnung nach Anspruch 1, **dadurch gekennzeichnet, dass** das andere Ringelement (62, 60) radial beweglich gelagert ist.

3. Verfahren zum Herstellen einer Kupplungsanordnung (12), insbesondere nach Anspruch 1 oder 2, mit den Schritten:
Bereitstellen eines Federpakets (52; 54), wobei das Federpaket (52, 54) ein erstes Ringelement (60), ein zweites Ringelement (62) und eine Mehrzahl von Einzelfedern (64) aufweist, die mit dem ersten und dem zweiten Ringelement (60, 62) gekoppelt sind, derart, dass das erste und das zweite Ringelement (60, 62) in einer axialen Richtung gegeneinander federgekoppelt bewegbar sind, wobei das erste und das zweite Ringelement (60, 62) jeweils einen Innenumfangsabschnitt (68) und einen Außenumfangsabschnitt (66) aufweisen, und wobei das erste und/oder das zweite Ringelement (60, 62) im Bereich ihrer jeweiligen Innenumfangsabschnitte (68) und/oder im Bereich ihrer jeweiligen Außenumfangsabschnitte eine Mehrzahl von radial verformbaren Elementen (70; 70a) aufweist, die dazu ausgebildet sind, um das Federpaket (52; 54) in Bezug auf die Ringfläche (78) zentrieren zu können,
axiales Aufschieben des Federpakets (52; 54) auf ein Trägerelement (76) der Kupplungsanordnung (12), wobei sich die verformbaren Elemente (70; 70a) eines Ringelements (60, 62) an dem Trägerelement (76) radial verformen, um das Federpaket (52; 54) in Bezug auf das Trägerelement (76) zu zentrieren und verliersicher zu halten.

## Claims

1. A clutch assembly (12) for a motor vehicle drive train (10), having a carrier element (76) which has an axially extending ring surface (78) on which a spring pack (52; 54) is mounted,
wherein the spring pack (52, 54) comprises a first ring element (60), a second ring element (62), and a plurality of individual springs (64) which are coupled to the first and second ring elements (60, 62) such that the first and second ring elements (60, 62) are spring-coupled movable relative to each other in an axial direction, wherein the first and second ring elements (60, 62) each have an inner peripheral portion (68) and an outer peripheral portion (66),
wherein the first and/or the second ring element (60, 62) has, in the region of its respective inner peripheral portion (68) and/or in the region of its respective outer circumferential portion, a plurality of radially deformable elements (70; 70a) which are designed to be able to center the spring pack (52; 54) with respect to the ring surface (78),
wherein the deformable elements (70; 70a) of a ring element (60, 62) have deformed on the ring surface (78) and captively hold the spring pack (52; 54) captive in relation to the carrier element (76) so that the spring pack (52; 54) is captively mounted on the ring surface (78).

2. The clutch assembly according to claim 1, **characterized in that** the other ring element (62, 60) is radially movably mounted.

3. A method for manufacturing a clutch assembly (12), in particular according to claim 1 or 2, with the steps:
providing a spring pack (52; 54), wherein the spring pack (52, 54) comprises a first ring element (60), a second ring element (62) and a plurality of individual springs (64) coupled to the first and second ring elements (60, 62) such that the first and second ring elements (60, 62) are movable in an axial direction spring-coupled with respect to each other, wherein the first and the second ring element (60, 62) each have an inner peripheral portion (68) and an outer peripheral portion (66), and wherein the first and/or the second ring element (60, 62) has a plurality of radially deformable elements (70;70a) in the region of their respective inner peripheral portions (68) and/or in the region of their respective outer peripheral portions, which are designed to be able to center the spring pack (52; 54) with respect to the ring surface (78),
axially pushing the spring pack (52; 54) onto a carrier element (76) of the clutch assembly (12), wherein the deformable elements (70; 70a) of an ring element (60, 62) deform radially on the carrier element (76) to center the spring pack (52; 54) with respect to the carrier element (76) and hold it captive.

## Revendications

1. Agencement d'embrayage (12) pour une chaîne cinématique d'un véhicule à moteur (10), comprenant un élément de support (76) qui présente une surface annulaire s'étendant axialement (78), sur laquelle est supporté un ensemble de ressorts (52 ; 54),
l'ensemble de ressorts (52; 54) présentant un premier élément annulaire (60), un deuxième élément annulaire (62) et une pluralité de ressorts individuels (64) qui sont accouplés au premier et au deuxième élément annulaire (60, 62), de telle manière que le premier et le deuxième élément annulaire (60, 62) soient déplaçables l'un par rapport à l'autre en direction axiale par le couplage à ressorts, le premier et le deuxième élément annulaire (60, 62) présentant chacun une partie périphérique intérieure (68) et une partie périphérique extérieure (66),
le premier et/ou le deuxième élément annulaire (60, 62) présentant, dans la région de leur partie périphérique intérieure (68) respective et/ou dans la région de leur partie périphérique extérieure respective une pluralité d'éléments radialement déformables (70; 70a), qui sont conçus de façon à pouvoir centrer l'ensemble de ressorts (52; 54) par rapport à la surface annulaire (78),
les éléments déformables (70; 70a) d'un élément annulaire (60, 62) s'étant déformés au niveau de la surface annulaire (78) et retenant l'ensemble de ressorts (52 ; 54) de manière imperdable par rapport à l'élément de support (78), de telle sorte que l'ensemble de ressorts (52 ; 54) soit monté de manière imperdable sur la surface annulaire (78).

2. Agencement d'embrayage selon la revendication 1, **caractérisé en ce que** l'autre élément annulaire (62, 60) est supporté de manière déplaçable radialement.

3. Procédé de fabrication d'un agencement d'embrayage (12), en particulier selon la revendication 1 ou 2, comprenant les étapes suivantes :
fourniture d'un ensemble de ressorts (52 ; 54), l'ensemble de ressorts (52, 54) présentant un premier élément annulaire (60), un deuxième élément annulaire (62) et une pluralité de ressorts individuels (64) qui sont accouplés au premier et au deuxième élément annulaire (60, 62) de telle manière que le premier et le deuxième élément annulaire (60, 62) soient déplaçables l'un par rapport à l'autre en direction axiale par le couplage à ressorts, le premier et le deuxième élément annulaire (60, 62) présentant chacun une partie périphérique intérieure (68) et une partie périphérique extérieure (66), et le premier et/ou le deuxième élément annulaire (60, 62) présentant, dans la région de leur partie périphérique intérieure (68) respective et/ou dans la région de leur partie périphérique extérieure respective une pluralité d'éléments radialement déformables (70; 70a), qui sont conçus de façon à pouvoir centrer l'ensemble de ressorts (52; 54) par rapport à la surface annulaire (78),
déplacement axial de l'ensemble de ressorts (52 ; 54) sur un élément de support (76) de l'agencement d'embrayage (12), les éléments déformables (70 ; 70a) d'un élément annulaire (60, 62) se déformant radialement au niveau de l'élément de support (76) afin de centrer l'ensemble de ressorts (52 ; 54) par rapport à l'élément de support (76) et de le retenir de manière imperdable.
